# FASCICULE DE BREVET EUROPEEN

(11) **EP 0 715 936 B1**
(45) Date de publication et mention de la délivrance du brevet: **02.06.1999**
(21) Numéro de dépôt: 95450018.7
(22) Date de dépôt: 01.12.1995
(51) Int. Cl.: B29C 35/08, G21K 5/10

(54) **Installation de polymérisation par ionisation de structures notamment de dimensions importantes constituées principalement de matériaux composites**
Anlage zum Polymerisieren durch Ionisation von Strukturen, insbesondere sehr grossen Abmessungen, die vorwiegend aus Verbundwerkstoffen bestehen
Installation for polymerisation by ionising structures, in particular of very large dimensions, mainly comprising composite materials

(30) Priorité: 05.12.1994 FR 9414881
(43) Date de publication de la demande: 12.06.1996
(73) Titulaire: AEROSPATIALE Société Nationale Industrielle, 75781 Paris Cédex 16 (FR)
(72) Inventeur: Perilleux, Philippe Jean Pierre, F - 33160 St Medard en Jalles (FR)
(74) Mandataire: Thébault, Jean-Louis

(56) Documents cités:
- EP-A- 0 105 580
- EP-A- 0 165 118
- FR-A- 1 296 844
- FR-A- 2 298 166
- FR-A- 2 488 766
- GB-A- 869 267
- GB-A- 987 884
- COMPOSITE POLYMERS, vol. 3, no. 6, 1 Janvier 1990 pages 438-451, XP 000226334 BEZIERS D ET AL 'ELECTRON BEAM CURING OF COMPOSITES'

## Description

La présente invention se rapporte à une installation de polymérisation par ionisation de structures, notamment de dimensions importantes, constituées principalement de matériaux composites et plus précisément d'irradiation par rayons X ou électrons des résines entrant dans la composition des matériaux composites, en particulier, bien que non exclusivement, de pièces complexes de révolution telles que par exemple des enceintes ou réservoirs cylindriques à extrémités hémisphériques ou analogues.

On sait déjà depuis plusieurs années traiter des pièces en matériau composite constitué de fibres, tissus, feutres en verre, Kevlar, carbone et autres matériaux, d'une résine radiodurcissable et d'éléments d'assemblage et/ou d'inserts notamment métalliques ou autres types de matériaux, ledit matériau composite pouvant présenter une forte épaisseur, en soumettant ce matériau à une irradiation par un rayonnement électronique ou X afin de polymériser ou réticuler la résine sans échauffement.

Pour plus de détails sur une telle technique, on pourra se reporter utilement au brevet européen EP-0.165.118 déposé au nom de la Demanderesse et plus particulièrement destiné au traitement de pièces de révolution allongées telles que des tubes.

Ce document décrit en particulier une installation de polymérisation/réticulation comprenant des moyens pour produire un faisceau d'électrons, des moyens pour diriger le faisceau d'électrons vers la pièce à traiter, une cible apte à engendrer sous l'action du faisceau d'électrons un rayonnement X, des moyens pour placer la cible sur la trajectoire des électrons ou en dehors de celle-ci afin d'irradier la pièce respectivement avec un rayonnement X ou avec un rayonnement électronique et des moyens pour effectuer un mouvement relatif entre le faisceau irradiant et la pièce afin que celle-ci soit soumise en tout ou partie à l'action de l'un desdits rayonnements.

Le mouvement relatif en question consiste en un déplacement de la pièce suivant son axe, horizontalement et orthogonalement à l'axe du faisceau irradiant, combiné à une rotation de la pièce autour de son axe.

Par ailleurs, les doses nécessaires à l'irradiation de la résine du matériau composite de la pièce en vue de sa polymérisation étant fonction dans le cas du rayonnement X de la distance entre la cible et la pièce, il est prévu de régler cette distance et, ce, notamment pour optimiser le temps de polymérisation.

Deux modes d'action sont envisagés : la pièce est placée de manière à pouvoir être rapprochée ou éloignée de la cible, ou bien l'axe de la pièce est maintenu fixe et la cible est déplacée en direction de la pièce.

Dans l'installation décrite et représenté dans EP 0.165.118, le générateur d'électrons est monté fixe dans sa casemate de protection, le canon à électrons étant disposé verticalement et tourné vers le sol. Le cornet de balayage du générateur traverse par une fenêtre un bouclier horizontal séparant ladite casemate de la cellule d'irradiation sousjacente dans laquelle se déplace la pièce à irradier, portée par un chariot approprié.

La pièce, un tube allongé en matériau composite, peut défiler sous le cornet du générateur, une cible de conversion étant interposée entre ce cornet et la pièce lorsque l'on veut irradier cette dernière avec un rayonnement X.

Conformément au second mode de réglage de la distance entre cible et pièce, la cible escamotable est en outre montée mobile suivant l'axe du faisceau irradiant.

Si un tel montage permet de mieux régler les doses d'irradiation nécessaires en particulier en cas d'épaisseur importante de matériau composite, et est adapté au type de pièce à traiter, à savoir des pièces tubulaires, il présente néanmoins deux inconvénients majeurs.

D'une part, il oblige à une modification de la concentration du faisceau d'électrons frappant la cible lorsque la distance entre celle-ci et la fenêtre de sortie du cornet est modifiée.

En effet, le faisceau d'électrons tel que géométriquement défini par la fenêtre de sortie du cornet est légèrement divergent en sorte qu'un éloignement de la cible entraîne une diminution corrélative de la concentration du faisceau d'électrons sur la cible et donc de l'intensité du rayonnement X engendré.

Pour remedier à cela, on pourrait dimensionner en conséquence la cible, mais l'accroissement de la surface de la cible trouverait rapidemant ses limites, d'une part, au point de vue géométrique et, d'autre part, au point de vue mécanique, car il se pose des problèmes de refroidissement et de tenue de la cible qui est une plaque mince soumise sur sa face interne à un refroidissement et à un vide poussé.

Par suite, on ne peut pas se permettre un grand débattement de la cible autour de sa position optimale par rapport au cornet, sauf à utiliser un accélérateur d'électrons surpuissant, ce qui n'est pas non plus satisfaisant.

L'obligation de correction de la concentration corrélative du faisceau d'électrons sortant du cornet rend donc plus complexe et délicate la gestion des moyens d'asservissement du dispositif d'irradiation.

D'autre part, les limites pratiques du déplacement de la cible relativement au cornet réduisent considérablement les capacités du dispositif d'irradiation.

Si ce dernier peut convenir pour traiter des pièces tubulaires du type représenté dans le document cité plus haut dont les parties composites se situent dans une fourchette de distance vis à vis du cornet relativement étroite, encore que, d'une pièce à une autre, il faille modifier ou régler le système de montage sur le chariot de déplacement pour positionner correctement les parties composites en éloignement vis à vis du cornet qui est fixe, ledit dispositif d'irradiation ne peut traiter des pièces dont la géométrie est telle que les parties en matériau composite se situent dans une plage d'éloignement par rapport à l'axe de la pièce très importante, ce qui est par exemple le cas des parties d'extrémités bombées, hémisphériques ou autres, des enceintes ou réservoirs évoqués plus haut.

Certes, dans un tel cas, la difficulté pourrait être surmontée en prévoyant, en plus de la mobilité de la cible par rapport à la pièce, une mobilité, dans l'axe du faisceau irradiant, de la pièce sur son chariot transporteur.

Malheureusement, une telle solution rend encore plus complexe, coûteuse et délicate à asservir l'installation d'irradiation, car il faut de surcroît concevoir des chariots transporteurs spéciaux et les asservir en conséquence pour ce qui concerne l'éloignement de la pièce vis à vis du générateur à électrons.

La présente invention vise à pallier les inconvénients d'un tel dispositif d'irradiation en le perfectionnant afin de le rendre capable de traiter notamment des pièces de révolution de dimensions importantes et présentant des parties en matériau composite se trouvant dans une plage d'éloignement par rapport à l'axe de la pièce très importante, telles que des enceintes ou réservoirs cylindriques à extrémités bombées dont la paroi ou partie de paroi en matériau composite, non seulement peut présenter une épaisseur évolutive, mais peut se situer à une distance de l'axe de plusieurs dizaines de centimètres ou seulement de quelques centimètres, selon que l'on considère respectivement la virole cylindrique ou la zone polaire des extrémités bombées.

A cet effet, l'invention a pour objet une installation de polymérisation par ionisation de structures notamment de dimensions importantes, constituées principalement de matériaux composites, comprenant :
- un générateur d'électrons disposé dans une casemate et comprenant un accélérateur linéaire muni d'un cornet à fenêtre d'irradiation et des moyens de servitude dudit accélérateur,
- une cible de conversion du faisceau d'électrons en rayonnement X montée escamotable de façon à s'interposer ou non dans le faisceau de sortie dudit cornet,
- une cellule d'irradiation contenant la structure à traiter,
- et des moyens de support-présentation de ladite structure en regard du faisceau d'électrons ou du rayonnement X,
   caractérisée en ce que l'ensemble accélérateur-cornet-cible et une partie au moins des moyens de servitude est embarqué sur une plate-forme mobile dans la casemate en direction de la cellule d'irradiation et suivant un axe horizontal parallèle à l'axe du faisceau engendré par l'accélérateur et en ce que l'équipage mobile ainsi constitué est muni, sur sa face frontale tournée vers la cellule d'irradiation, d'un bouclier de radio-protection susceptible de se déplacer dans un passage ménagé dans une paroi de séparation entre la cellule d'irradiation et la casemate, le contour du bouclier étant adapté à la section dudit passage en sorte de ne laisser subsister entre ledit contour et ledit passage qu'un intervalle aussi réduit que possible.

De préférence, une légère surpression en air neuf est créée dans la casemate afin d'éviter l'entrée de composés nitriques en provenance de la cellule d'irradiation, éventuellement des réglettes de réglage d'écartement entre le bord périphérique du bouclier et la paroi dudit passage, étant montées sur le bouclier, afin d'ajuster ledit écartement aux particularités dimensionnelles de ladite paroi.

Le bouclier est avantageusement formé de plusieurs parties de caractéristiques, notamment d'épaisseur, variables et géométriquement agencées en sorte de protéger vis à vis du rayonnement X et/ou du rayonnement électronique rétro-diffusé, chaque zone sensible dudit équipage mobile selon son degré de sensibilité et, ce, afin de réduire le plus possible le poids dudit bouclier.

L'installation de l'invention est particulièrement adaptée à l'irradiation de structures allongées de révolution et de dimensions importantes, notamment des structures de formes générales cylindriques à extrémités bombées.

Ces structures sont avantageusement placées sur un chariot susceptible de se déplacer dans la cellule d'irradiation de façon que la structure défile devant le cornet de l'accélérateur suivant un mouvement combiné de translation dans l'axe de la structure, cet axe demeurant horizontal et perpendiculaire et de rotation de la structure autour de cet axe sur son chariot porteur, à la manière connue.

Ainsi, sans avoir à translater latéralement la structure ou son chariot, la cible d'irradiation en X peut être approchée au plus près notamment des parties bombées d'extrémité, de manière efficace et sans avoir à faire de correction compensatoire sur le faisceau d'électrons puisque la distance entre la fenêtre de sortie du cornet de l'accélérateur et la cible n'est pas modifiée.

L'équipage mobile d'irradiation peut ainsi, à titre d'exemple se déplacer en translation en direction de la structure à traiter, sur une distance de 2,5 mètres ce qui permet d'irradier des structures, notamment de révolution, présentant le long de leur axe des différences de diamètre externe ou interne très importantes.

Suivant encore une autre caractéristique de l'invention, l'ensemble formé par le cornet de l'accélérateur et la cible est monté de façon à pouvoir pivoter autour de l'axe du faisceau d'électrons engendré, de préférence de part et d'autre d'une position dite d'origine correspondant à la position verticale de la fenêtre de sortie du cornet et d'une amplitude d'au moins 90°.

D'autres caractéristiques et avantages ressortiront de la description qui va suivre d'un mode de réalisation de l'installation selon l'invention, description donnée à titre d'exemple uniquement et en regard des dessins annexés sur lesquels :
- Figure 1 est une vue générale schématique de dessus d'une installation selon l'invention ;
- Figure 2 est une vue en élévation latérale de l'équipage mobile de l'installation ;
- Figure 3 est une vue de face d'un mode de réalisation d'un bouclier, monté sur l'équipage mobile ;
- Figure 4 représente une vue de dessus du dispositif de la figure 3 suivant une coupe horizontale dans l'axe du canon de l'accélérateur ;
- Figure 5 représente une vue en élévation latérale de gauche du dispositif de la figure 3 suivant une coupe verticale dans l'axe du canon de l'accélérateur ;
- Figure 6 est un schéma en vue de dessus illustrant le traitement d'une structure cylindrique à extrémités bombées, et
- Figures 7a et 7b illustrent schématiquement le montage rotatif du cornet de l'accélérateur et de la cible autour de l'axe du faisceau engendré.

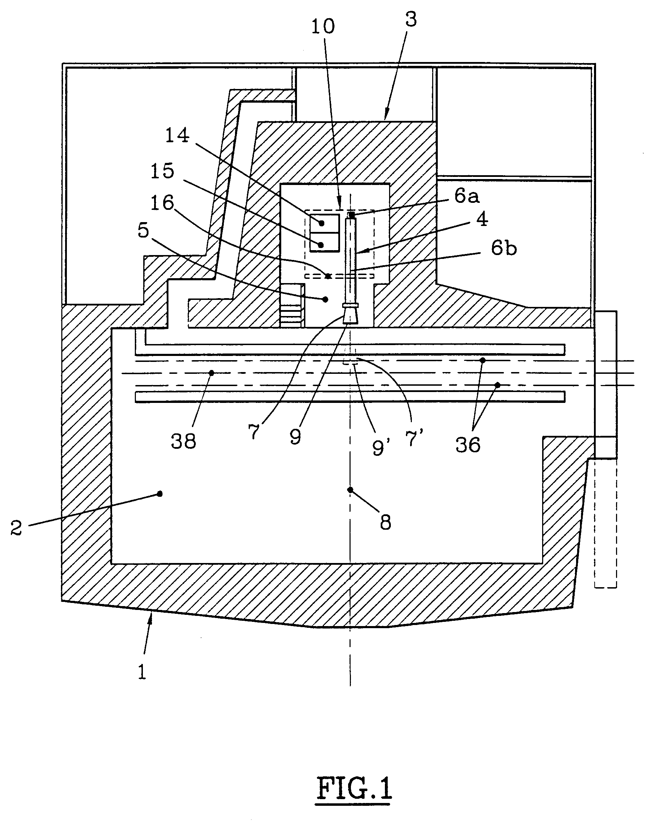

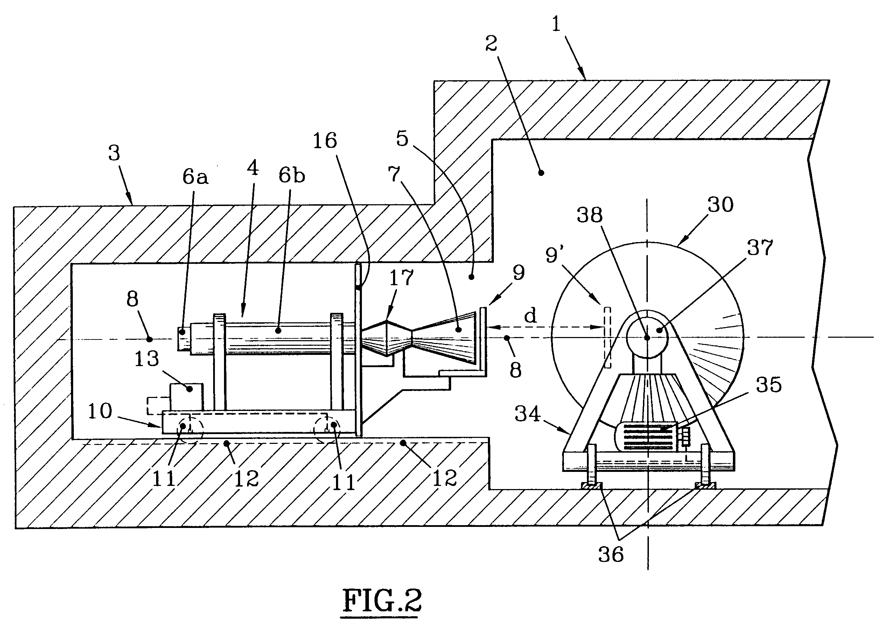

Sur les figures 1 et 2, on a représenté schématiquement une enceinte 1 en béton armé définissant une cellule d'irradiation 2 et une enceinte adjacente 3 également en béton armé formant casemate dans laquelle est disposé un générateur d'électrons 4, les deux enceintes 1, 3 communiquant par un passage horizontal 5 de section rectangulaire.

Le générateur d'électrons comprend un ensemble canon à électrons 6a-section accélératrice 6b muni à son extrémité d'un cornet de balayage 7 comportant une fenêtre de sortie de forme rectangulaire étroite disposée généralement verticalement à l'axe, symbolisé en 8, du faisceau d'électrons, l'ensemble canon-section accélératrice étant disposé horizontalement dans la casemate 3 en direction de la cellule d'irradiation 2.

Immédiatement en avant du cornet 7 peut être placé, à la manière connue, une cible de conversion 9, montée escamotable si l'on veut substituer au faisceau d'électrons d'irradiation un faisceau d'irradiation par rayonnement X.

Conformément à l'invention, l'ensemble formé par le canon à électrons 6a et la section accélératrice 6b, le cornet 7, la cible 9 et tout ou partie des moyens de servitude de l'accélérateur, est monté sur une plate-forme 10 mobile dans la casemate 3 suivant un axe parallèle à l'axe 8 du faisceau d'électrons engendré par l'accélérateur.

La plate-forme 10 est simplement symbolisée sur les dessins et se déplace par l'intermédiaire de galets 11 circulant sur des rails fixes symbolisés en 12 installés dans la dalle de plancher de la casemate 3. La plate-forme 10 est mue par exemple à l'aide de moyens moteurs 13 embarqués, les lignes en tiretés reliant les moyens 13 aux galets 11 illustrant simplement la fonction de déplacement de la plate-forme 10 par les moyens 13, étant entendu que bien des solutions techniques connues de l'homme de métier sont possibles pour faire déplacer le long des rails 12 l'équipage mobile constitué de la plate-forme 10 et de tous les éléments qu'elle porte.

Les moyens de servitude de l'accélérateur embarqués sur la plate-forme mobile 10 ne sont pas représentés sur la figure 2.

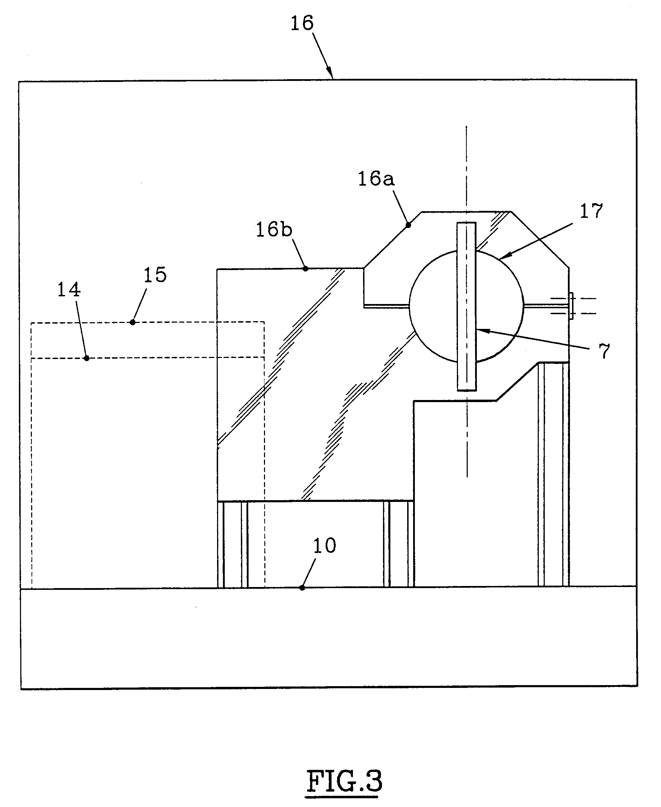

Ces moyens comprennent, entre autres, et comme illustré schématiquement sur les figures 3 à 5 qui sont des vues complémentaires de l'équipage mobile de la figure 2, la cuve 14 d'un klystron alimentant le canon à électrons 6a et la ligne à retard 15 du modulateur de l'accélérateur.

Ces moyens sont particulièrement sensibles aux rayonnements électromagnétiques, notamment les rayonnements X rétro-diffusés par la cible 9 en direction de la casemate 3.

Aussi, conformément à une autre caractéristique du dispositif de l'invention, ledit équipage mobile est muni sur sa face frontale tournée vers la cellule d'irradiation 2 d'un bouclier 16 disposé verticalement, fixé sur la plate-forme 10 et entourant, dans le mode de réalisation représenté, l'accélérateur d'électrons à hauteur de l'ensemble 17 de balayage du faisceau d'électrons interposé entre la section accélératrice 6b et le cornet 9.

Le bouclier 16 est de forme générale rectangulaire et correspond en forme et dimensions à la section du passage 5. L'intervalle entre les bords du bouclier 16 et la paroi du passage 5 doit être aussi faible que possible, d'une part, pour éviter au maximum la pénétration dans la casemate 3 des rayonnements X notamment et, d'autre part, pour permettre d'établir correctement dans la casemate 3 une légère surpression en air neuf interdisant notamment aux composés nitriques engendrés dans la cellule d'irradiation, généralement elle-même mise en légère dépression, de pénétrer dans la casemate 3.

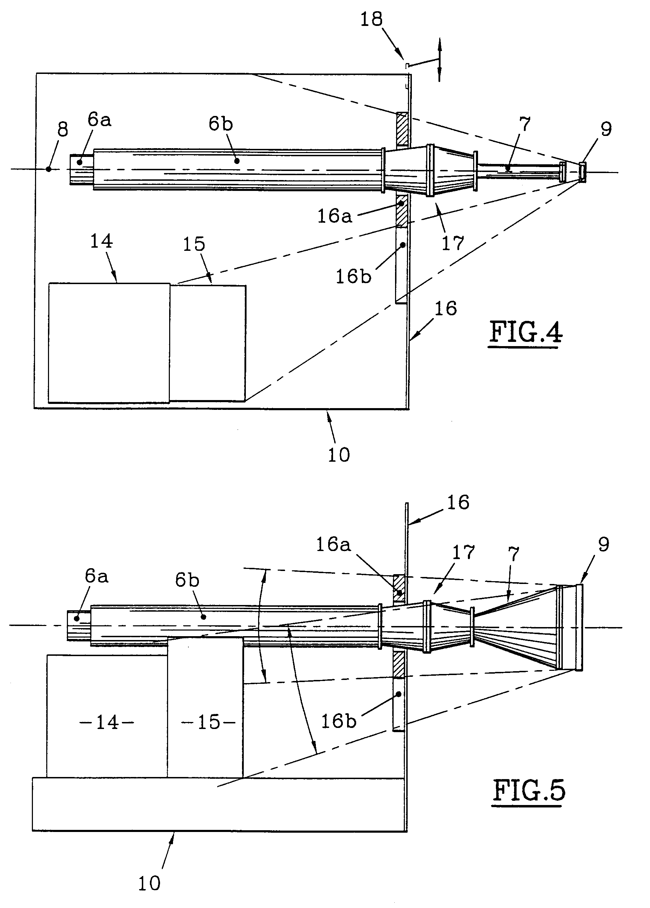

Pour parfaire la réduction des fuites entre les bords du bouclier 16 et la paroi du passage 5, lesdits bords ou certains d'entre eux, suivant la qualité au point de vue géométrique de la surface du passage en regard, peuvent être munis, comme représenté en tiretés en 18 sur la figure 4, d'une réglette montée coulissante sur le bouclier et permettant de régler in situ plus finement l'intervalle séparant le bouclier de la paroi du passage.

Le bouclier 16 est par exemple une plaque d'acier.

Pour réduire le poids du bouclier 16, celui-ci est de préférence constitué de plusieurs parties d'épaisseur différente et de forme et implantation appropriées au but recherché. Ainsi, pour préserver efficacement les zones sensibles, notamment la section accélératrice 6b, la cuve du Klystron 14 et la ligne à retard 15, le bouclier 16 comporte des parties d'épaisseur sensiblement accrue alors que le reste du bouclier peut présenter une épaisseur réduite.

Par exemple, comme illustré par les figures 3 à 5, le bouclier 16 comporte une première partie 16a d'épaisseur renforcée, une dizaine de centimètres par exemple, de forme sensiblement annulaire et entourant la section de balayage 17 et une seconde partie 16b, de même épaisseur, de forme générale rectangulaire et sensiblement disposée au centre du bouclier en prolongement de la partie 16a, le reste du bouclier ayant par exemple une épaisseur de l'ordre du centimètre.

Comme on peut l'observer sur les figures 4 et 5, la partie 16a forme un écran pour la section accélératrice 6 contre le rayonnement X rétro-diffusé par la cible 9. Quant aux dispositifs 14, 15, ils sont protégés à la fois par la partie 16a et par la partie 16b.

Les formes, dimensions et implantations dans le bouclier des sections d'épaisseur renforcée seront bien entendu fonction de la situation et de la morphologie des circuits ou dispositifs portés par la plate-forme 10 et qui doivent faire l'objet d'une protection renforcée.

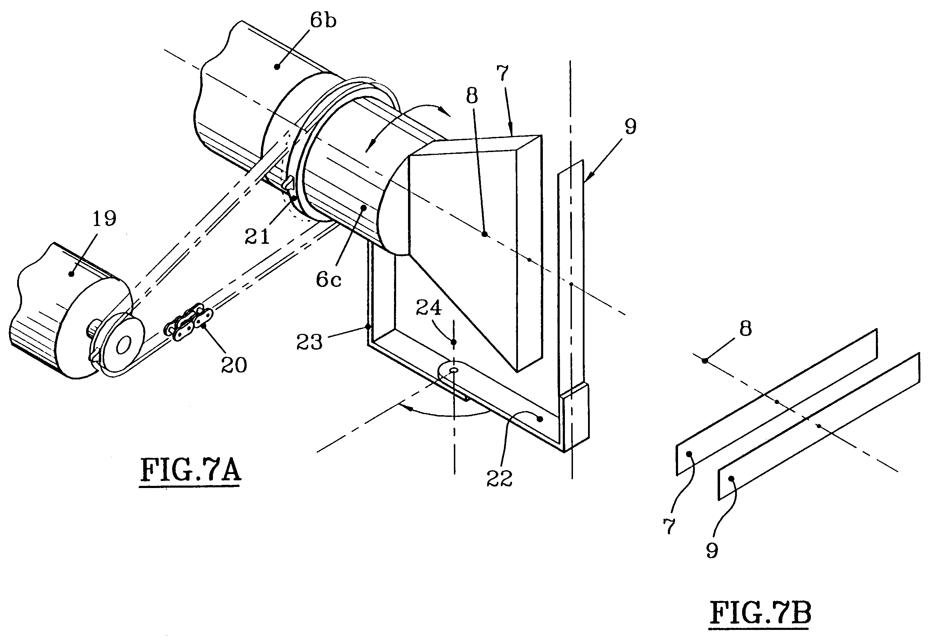

Les figures 7a, 7b illustrent très schématiquement une variante de réalisation permettant de faire pivoter autour de l'axe (8) de l'accélérateur, l'ensemble cornet-cible, dans un sens ou dans l'autre, d'au moins 90°, à partir de la position dite normale, à savoir la position verticale de la fenêtre de sortie du cornet 7 (figure 7a).

A cet effet, le cornet 7 est solidaire d'un anneau de liaison 6c interposé entre le cornet 7 et la section accélératrice 6b et monté rotatif sur cette dernière.

La rotation de l'anneau 6c est réalisée par exemple par un moteur électrique 19 monté sur la plate-forme 10 et entraînant l'anneau 6c par une chaîne 20 et un pignon 21 solidaire dudit anneau.

La cible 9 est disposée en regard de la fenêtre de sortie du cornet 7 et, à la manière connue, est montée escamotable latéralement lorsque le dispositif est simplement utilisé pour une irradiation électronique.

A cet effet, la cible 9 est montée à l'extrémité d'un bras 22 disposé sous le cornet 7 et susceptible de pivoter sur un support 23, par tous moyens appropriés (non représentés) autour d'un axe vertical 24 perpendiculaire à l'axe 8. Le support 23 est solidaire de l'anneau rotatif 6c.

En position de travail, la cible 9 présente un plan perpendiculairement à l'axe 8.

Il est clair qu'en actionnant le moteur 19, dans un sens ou dans l'autre, l'ensemble anneau 6c-cornet 7- cible 9 va pivoter autour de l'axe 8 dans un sens ou dans l'autre, du degré désiré.

On a représenté symboliquement en figure 7b la position du couple cornet 7-cible 9 après rotation de 90°, le cornet étant alors à l'horizontale.

L'accélérateur est par ailleurs muni, à la manière connue, d'une cible calorimétrique, escamotable à la manière de la cible 9 et donc portée par le support 23, une telle cible calorimétrique n'étant pas représentée les dessins.

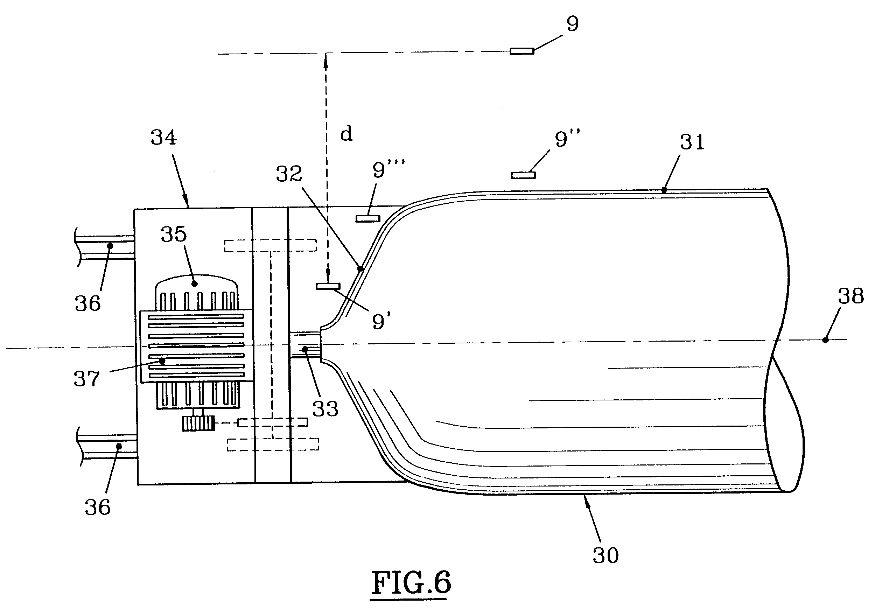

La structure à irradier représentée schématiquement en 30 sur les figures 2 et 6 a une forme cylindrique (virole 31) et des extrémités bombées 32. Elle est supportée à l'horizontale à ses deux extrémités entre deux poupées dont l'une 33 est motrice, sur un chariot 34 pourvu de moyens d'entraînement 35 le long de rails 36 pénétrant dans la cellule d'irradiation 2 orthogonalement à l'axe 8 du faisceau d'électrons.

La rotation de la structure 30 sur son chariot 34 est assurée par un moteur 37.

Eventuellement, les poupées (33) de support-entraînement de la structure 30 sont montées réglables en hauteur sur le chariot 34.

La structure 30 est à la manière connue présentée devant le cornet 7 avec son axe 38 horizontal et perpendiculaire à l'axe du faisceau d'électrons 8 et défile devant le cornet en étant animée d'un double mouvement, de translation le long des rails 36 et de rotation autour de son axe 38.

Sur les figures 1, 2 et 6, on a représenté (en 7, 9) la position initiale, de repos, du cornet et de la cible de l'accélérateur, la cible 9 se trouvant au voisinage du débouché du passage 5 dans la cellule d'irradiation 2, cependant que le bouclier 16 se trouve à l'autre extrémité du passage, côté casemate 3.

En 7' et 9' sont représentées les positions d'avancée extrême du cornet et de la cible vis à vis de l'axe 38 de la structure à irradier. La course d de déplacement de l'équipage mobile (figures 2 et 6) est de l'ordre par exemple de 2,5 mètres.

Comme illustré par la figure 6, selon la morphologie de la structure 30 à irradier, la cible 9 peut être amenée au plus près de la paroi externe de la structure aussi bien à hauteur de la virole 31 (cible 9'') qu'à hauteur des parties bombées 32 (cible 9''' et 9').

Bien entendu, le déplacement de la plate-forme 10 est asservi à celui du déplacement du chariot 34 sur ses rails 36.

D'une manière générale, les divers mouvements de translation du chariot 34, de la plate-forme 10, et de rotation de la structure 30 sont programmés et gérés par le pilote de l'accélérateur en fonction des doses de rayonnement X envoyées sur les différentes parties en matériau composite de ladite structure, c'est à dire les parties présentant d'une manière générale une masse surfacique supérieure à 4g/cm².

Comme indiqué plus haut, le déplacement de la cible 9 par rapport à la structure à irradier 30 ne nécessite aucun réglage du faisceau d'électrons incidents puisque c'est l'ensemble cornet 7-cible 9 qui se déplace d'un bloc.

Tout au long de son déplacement dans le passage 5, le bouclier 16 assure en permanence son rôle protecteur en coulissant dans le passage tout en conservant sensiblement le même intervalle ou jeu entre lui et la paroi du passage, ce jeu étant réduit le plus possible.

Le déplacement en translation de la plate-forme 10 est assuré à une vitesse lente et avec des rampes d'accélération et décélération programmées afin de ne pas engendrer de vibrations préjudiciables à certains composants du matériel embarqué, particulièrement fragiles.

Le déplacement de la plate-forme peut se faire avantageusement à deux vitesses, l'une relativement rapide (l'accélérateur n'étant pas en service) pour amener la cible 9 dans la zone de travail et l'autre, lente, en cours d'irradiation de la structure.

L'invention s'applique à l'irradiation de structures de révolution (cylindrique, conique, sphérique, etc...), mais également à l'irradiation de structure de toute morphologie et dimension et qui n'est pas de révolution. Par structure, on entend tous corps ou pièces simple ou complexe, épaisses (à épaisseur variable ou non) ou massives, comportant ou non des inserts de nature différente de celle de la résine à polymériser.

Le pivotement de l'ensemble cornet 7- cible 9 autour de l'axe 8 du faisceau d'électrons incidents, grâce au moteur 19, permet d'orienter le spectre d'émission des rayons X par rapport à la partie de la structure à irradier. Ceci autorise un traitement différent de zones différentes de la structure ainsi qu'un traitement plus efficace et ciblé de structure ou de parties de structure allongées, c'est-à-dire disposées horizontalement au moment de l'irradiation.

Le pivotement du cornet 7 autour de l'axe 8 peut bien entendu être mis en oeuvre avec la cible 9 escamotée latéralement, le dispositif fonctionnant en irradiation électronique.

Enfin l'invention, n'est évidemment pas limitée aux modes de réalisation représentés et décrits ci-dessus mais en couvre au contraire toutes les variantes, notamment en ce qui concerne la technologie de réalisation des divers moyens pour translater la plate-forme 10.

## Revendications

1. Installation de polymérisation par ionisation de structures notamment de dimensions importantes, constituées principalement de matériaux composites, comprenant :
- un générateur d'électrons (4) disposé dans une casemate (3) et comprenant un accélérateur linéaire (6) muni d'un cornet (7) à fenêtre d'irradiation et des moyens de servitude dudit accélérateur,
- une cible (9) de conversion du faisceau d'électrons en rayonnement X, montée escamotable, de façon à s'interposer ou non dans le faisceau de sortie dudit cornet,
- une cellule d'irradiation (2) contenant la structure (30) à traiter,
- et des moyens (34) de support-présentation de ladite structure (30) en regard du faisceau d'électrons ou du rayonnement X,
caractérisée en ce que l'ensemble accélérateur (4)-cornet (7)-cible (9) et une partie au moins des moyens de servitude (14,15) est embarqué sur une plate-forme mobile dans la casemate (3) en direction de la cellule d'irradiation (2) et suivant un axe horizontal parallèle à l'axe (8) du faisceau engendré par l'accélérateur et en ce que l'équipage mobile ainsi constitué est muni, sur sa face frontale tournée vers la cellule d'irradiation (2), d'un bouclier de radio-protection (16) susceptible de se déplacer dans un passage (5) ménagé dans une paroi de séparation entre la cellule d'irradiation (2) et la casemate (3), le contour du bouclier étant adapté à la section dudit passage en sorte de ne laisser subsister entre ledit contour et ledit passage qu'un intervalle aussi réduit que possible.

2. Installation suivant la revendication 1, caractérisée en ce qu'une légère surpression en air neuf est créée dans la casemate (3) afin d'éviter l'entrée de composés nitriques en provenance de la cellule d'irradiation (2).

3. Installation suivant la revendication 1 ou 2, caractérisée en ce que des réglettes (18) de réglage d'écartement entre le bord périphérique du bouclier (16) et la paroi dudit passage (5) sont montées sur le bouclier.

4. Installation suivant l'une des revendications 1 à 3, caractérisée en ce que le bouclier (16) est formé de plusieurs parties (16a, 16b) de caractéristiques, notamment d'épaisseur, variables et géométriquement agencées en sorte de protéger vis à vis du rayonnement X et/ou du rayonnement électronique rétro-diffusé, chaque zone sensible dudit équipage mobile selon son degré de sensibilité.

5. Installation suivant l'une des revendications 1 à 4, caractérisée en ce que la structure à irradier (30) est une structure de révolution défilant devant le cornet (7) de l'accélérateur avec son axe (38) horizontal perpendiculaire à l'axe (8) du faisceau d'électrons de l'accélérateur et soumise à un double mouvement de rotation autour de son axe et de translation suivant son axe, les mouvements de la plate-forme (10) et de la structure (30) à irradier étant asservis.

6. Installation suivant l'une des revendications 1 à 5, caractérisée en ce que l'ensemble cornet (7)-cible (9) est monté rotatif autour de l'axe (8) de l'accélérateur, dans un sens ou dans l'autre et d'une amplitude au moins égale à 90°.

## Claims

1. Installation for the polymerisation, by ionisation, of structures, notably of large size, consisting principally of composite materials, comprising:
- an electron generator (4) disposed in a cave (3) and comprising a linear accelerator (6) provided with a horn (7) with an irradiation aperture and means of slaving said accelerator,
- a target (9) for converting electron beams into X-rays, mounted so as to be retractable, so as to be interposed or not in the output beam of said horn,
- an irradiation cell (2) containing the structure (30) to be treated, and
- means (34) of supporting and offering up said structure (30) opposite the beam of electrons or X-rays,
characterised in that the assembly of accelerator (4), horn (7) and target (9) and at least part of the slaving means (14, 15) is installed on a movable platform in the cave (3) in the direction of the irradiation cell (2) and along a horizontal axis parallel to the axis (8) of the beam generated by the accelerator and in that the movable equipment thus formed is provided, on its front face turned towards the irradiation cell (2), with a radioprotection shield (16) able to move in a passage (5) provided in a separation wall between the irradiation cell (2) and the cave (3), the contour of the shield being adapted to the cross-section of said passage so as to leave only as small a gap as possible remaining between said contour and said passage.

2. Installation according to Claim 1, characterised in that a slight overpressure of new air is created in the cave (3) in order to prevent the entry of nitric compounds coming from the irradiation cell (2).

3. Installation according to Claim 1 or 2, characterised in that strips (18) for adjusting the separation between the peripheral edge of the shield (16) and the wall of said passage (5) are mounted on the shield.

4. Installation according to one of Claims 1 to 3, characterised in that the shield (16) is formed by several parts (16a, 16b) with variable characteristics, notably thickness, arranged so as to protect, vis-à-vis X-rays and/or backscattered electron radiation, each sensitive area of said movable equipment according to its degree of sensitivity.

5. Installation according to one of Claims 1 to 4, characterised in that the structure to be irradiated (30) is a cylindrical structure passing in front of the horn (7) of the accelerator with its horizontal axis (38) perpendicular to the axis (8) of the electron beam of the accelerator and subjected to a dual movement of rotation about its axis and translation along its axis, the movements of the platform (10) and of the structure (30) to be irradiated being slaved.

6. Installation according to one of Claims 1 to 5, characterised in that the assembly of horn (7) and target (9) is mounted so as to rotate about the axis (8) of the accelerator, in one direction or the other and through at least 90°.

## Patentansprüche

1. Anlage zum Polymerisieren durch Ionisation von Strukturen insbesondere von sehr großen Abmessungen, die hauptsächlich aus Verbundwerkstoffen bestehen, umfassend
- einen Elektronengenerator (4), der in einem abgeschirmten Raum (3) angeordnet ist und einen Linearbeschleuniger (6) umfaßt, der mit einem Horn (7) mit einem Bestrahlungsfenster und mit Mitteln zum Benutzen des Beschleunigers versehen ist,
- ein Target (9) zur Umwandlung des Elektronenstrahls in Röntgenstrahlung, das derart einziehbar montiert ist, daß es in den Austrittsstrahl des Horns eingeschaltet ist oder nicht,
- eine Bestrahlungszelle (2), die die zu behandelnde Struktur (30) enthält,
- und Mittel (34) zum Tragen und Präsentieren der Struktur (34) gegenüber dem Elektronennstrahl oder der Röntgenstrahlung,
dadurch gekennzeichnet, daß die Gesamtheit aus Beschleuniger (4), Horn (7) und Target (9) und ein Teil wenigstens der Mittel zum Benutzen (14, 15) auf einer in dem abgeschirmten Raum (3) in Richtung der Bestrahlungszelle (2) und entsprechend einer horizontalen, parallel zur Achse (8) des von dem Beschleuniger erzeugten Strahls befindlichen Achse beweglichen Plattform angeordnet ist, und daß die so gebildete bewegliche Austustung an ihrer gegen die Bestrahlungszelle (2) gerichteten Stirnseite mit einem Strahlenschutzschild (16) versehen ist, der in der Lage ist, in einem Durchgang (5) verschoben zu werden, der in einer Trennwand zwischen der Bestrahlungszelle (2) und dem abgeschirmten Raum (3) angebracht ist, wobei der Rand des Schildes an den Querschnitt des Durchgangs derart angepaßt ist, daß zwischen dem Rand und dem Durchgang nur ein Spiel verbleibt, daß so klein wie möglich ist.

2. Anlage nach Anspruch 1, dadurch gekennzeichnet, daß in dem abgeschirmten Raum (3) ein leichter Überdruck an Frischluft erzeugt wird, um den Eintritt von stickstoffhaltigen Verbindungen aus der Bestrahlungszelle (2) zu vermeiden.

3. Anlage nach Anspruch 1 oder 2, dadurch gekennzeichnet, daß Stelleisten (18) zum Einstellen des Abstandes zwischen dem Umfangsrand des Schildes (16) und der Wandung des Durchgangs (5) an dem Schild montiert sind.

4. Anlage nach einem der Ansprüche 1 bis 3, dadurch gekennzeichnet, daß der Schild (16) aus mehreren Teilen (16a, 16b) mit unterschiedlichen Eigenschaften insbesondere bezüglich der Stärke gebildet und geometrisch derart ausgebildet ist, daß jeder empfindliche Bereich der beweglichen Ausrüstung entsprechend seinem Empfindlichkeitsgrad gegenüber rückgestreuter Röntgen- und/oder Elektronenstrahlung geschützt ist.

5. Anlage nach einem der Ansprüche 1 bis 4, dadurch gekennzeichnet, daß die zu bestrahlende Struktur (30) eine Rotationsstruktur ist, die vor dem Horn (7) des Beschleunigers mit ihrer horizontalen Achse (38) senkrecht zur Achse (8) des Elektronenstrahls des Beschleunigers vorbeiläuft und einer doppelten Bewegung der Rotation um ihre Achse und der Translation entlang ihrer Achse untervorfen ist, wobei die Bewegungen der Plattform (10) und der zu bestrahlenden Struktur (30) geregelt sind.

6. Anlage nach einem der Ansprüche 1 bis 5, dadurch gekennzeichnet, daß die Gesamtheit aus Horn (7) und Target (9) um die Achse (8) des Beschleunigers drehbar in der einen oder anderen Richtung und mit einer Amplitude wenigstens gleich 90° montiert ist.
